# EUROPEAN PATENT APPLICATION

(11) **EP 2 290 965 A1**
(43) Date of publication of application: **02.03.2011**
(21) Application number: 10185664.9
(22) Date of filing: 18.12.2001
(51) Int. Cl.: H04N 7/088, H04N 7/173, H04N 7/24, H04L 29/08, G06F 17/30, H04N 7/16, H04N 5/445, H04L 9/32

(54) **Television Receiver**

(30) Priority: 12.01.2001 GB 0100912
(62) Divisional of application: 08017721.5
(71) Applicant: British Sky Broadcasting Limited, Middlesex TW7 5QD (GB)
(72) Inventor: Sansom, Patrick, Isleworth, Middlesex TW7 5QD (GB)
(74) Representative: Cross, James Peter Archibald

(57) **Abstract**

There is provided a television receiver which comprises a browser for accessing a web site via the internet. The television receiver is arranged to download data represented by the Wireless Markup Language (WML). The television receiver processes the data to output a signal representative of an interactive television image allowing user interaction with the web site via a remote control. The television receiver supports an extended WML Document Type Definition (DTD) which provides for the representation of additional layout and functional attributes pertaining to the interactive image. The layout of the interactive image is determined by metalevel information contained in broadcast television signals. Services from the interactive image can be selected by entering a set of numbers via the numeric keyboard on the remote control, wherein each of the numeric keys of the numeric keys is associated with a number of letters such that the set of numbers to be entered corresponds to a keyword descriptive of the service to be selected.

## Description

The present invention relates to a television receiver, a server, and a method of operating a server for connecting a television receiver to a remote site.

### Background of the Invention

It is known to operate browsers on computers to provide access to web servers via the internet in order to download web pages. A typical web page is represented using HTML (HyperText Markup Language). The downloading of HTML web pages requires a high bandwidth modem connection and the processing of large data files for the subsequent display of the webpage.

Television receivers are known which provide interactive services to a viewer. However, such television receivers usually have low bandwidth modems and are generally not suitable to provide internet access in order to download web pages. Such television receivers thus may not satisfy the desired degree of interaction. The present invention aims to address this problem.

### Summary of the Invention

According to one aspect of the presenet invention, there is provided a television receiver comprising a modem for establishing a telecommunications link to a remote site for retrieving therefrom information data containing information represented by the Wireless Markup Language (WML), and being arranged to output display data derived from said information data, said display data representing at least a part of an interactive image for display.

According to another aspect of the present invention, there is provided a television receiver for receiving signals representing image data and information data, said information data representing an interactive image for display and comprising metadata representative of metalevel information defining the configuration of the interactive image, the receiver comprising processing means for generating a signal representative of said interactive image configured in accordance with said metalevel information. According to another aspect of the present invention, there is provided a television receiver for receiving signals representing image data and information data and for outputting data representing an interactive image for display, the interactive image comprising a number of viewer-selectable items each associated with a service, the receiver being responsive to viewer-manipulation of an input device for selection of one of said items to cause the service associated with the selected item to be provided, wherein each of said items is associated with a key uniquely identifying the service associated therewith, wherein user selection of an item is effected by entry into the input device of the key associated with the service to be selected.

According to another aspect of the present invention, there is provided a television receiver for receiving broadcast television signals representing image data and first information data, the receiver comprising a modem for establishing a telecommunications link to a remote site for downloading second information data, the receiver being arranged to output data derived from said first and/or second information data and representing an interactive image for display, and being responsive to viewer manipulation of an input device for the selection of a service from the interactive image to determine whether the data pertaining to the service is contained in said first information data, and, depending on the determination, to establish a telecommunications link to said remote site to download therefrom information data pertaining to the selected service.

According to another aspect of the present invention, there is provided a method of operating a server for connecting a television receiver to a remote site, the method comprising: receiving a request from a television receiver for a connection with a remote site; authenticating the request by determining whether the request originates from a television receiver authorised to make such request; authorising the request by determining whether access to the remote site by the television receiver is available; forwarding the request to the remote site; receiving a response from the remote site; and transmitting the response to the television receiver.

According to another aspect of the present invention, there is provided a server arranged to perform the above method.

### Brief Description of the Drawings

Embodiments of the invention will now be described, by way of example only, with reference to the accompanying drawings, in which:
Figure 1 is a schematic overview of the WapTV infrastructure relating to the present invention;
Figures 2 to 4 are schematic screenshots generated by a television receiver embodying the present invention; and
Figure 5 is a schematic diagram illustrating WapTV on-line processing.

### Detailed Description of the Drawings

### Introduction

In the following, reference will be made to the WapTV infrastructure which is intended to refer to the infrastructure underlying the described embodiments of the invention. Also, reference will be made to the Sky Digital set-top box (STB) forming a television receiver according to an embodiment of the present invention. It is to be noted that these references are exemplary only and that the present invention is not limited to a use with the Sky Digital system.

The WapTV infrastructure is arrenged to support the delivery of various content services for Sky Digital users, including: (a) on-line commerce (b) information services and (c) enhanced, interactive TV services. The infrastructure allows the Sky Digital set-top box (STB) to connect to content providers, using Internet communications and content standards. This enables very rapid and flexible deployment of t-commerce services to Sky digital customers.

Furthermore, reference is made herein to the Wireless Application Protocol (WAP) and the Wireless Markup Language (WML) for WAP devices. The specification of WAP can be found at www.wapforum.org.

### Background

A method of delivering Internet content to the Sky STB based on the Wireless Markup Language (WML) will be described herein. This represents an alternative and fundamentally different approach to that taken by other digital TV platforms, i.e. the use of an HTML browser. WML offers a series of advantages:

### • Improved control over user interaction

WML content is delivered as a series of "cards" in a "deck". The interaction between cards is under the control of the author of the site. This means that the author can control the user interaction much more closely without making numerous requests. The more closely controlled user interface will be understood and appreciated by a wider audience than the more complex HTML content and therefore is more suited to the mass-market TV audience.

### • More efficient use of telephone line bandwidth to STB

The WAP infrastructure is actually split into two parts: (a) XML compilation is done at the online gateway server and (b) the STB processes the compiled WML and renders the compiled content on the screen. The amount of data, in compiled WML format, that has to be transmitted across the phone line is less than the equivalent service deployed via an HTML browser. This complements the modem capabilities of the typical STB and contributes to responsiveness appropriate to the TV medium.

### • Optimised for low power computing devices

The WML browser does less processing than the equivalent HTML browser and therefore requires less computing power for equivalent performance. This again complements the capabilities of the STB.

### • WML works well with a handset driven client device

WML was developed for mobile phones that are inherently like Sky's remote control handsets with data entry typically being restricted to numeric keys.

### Overview of the WapTV infrastructure

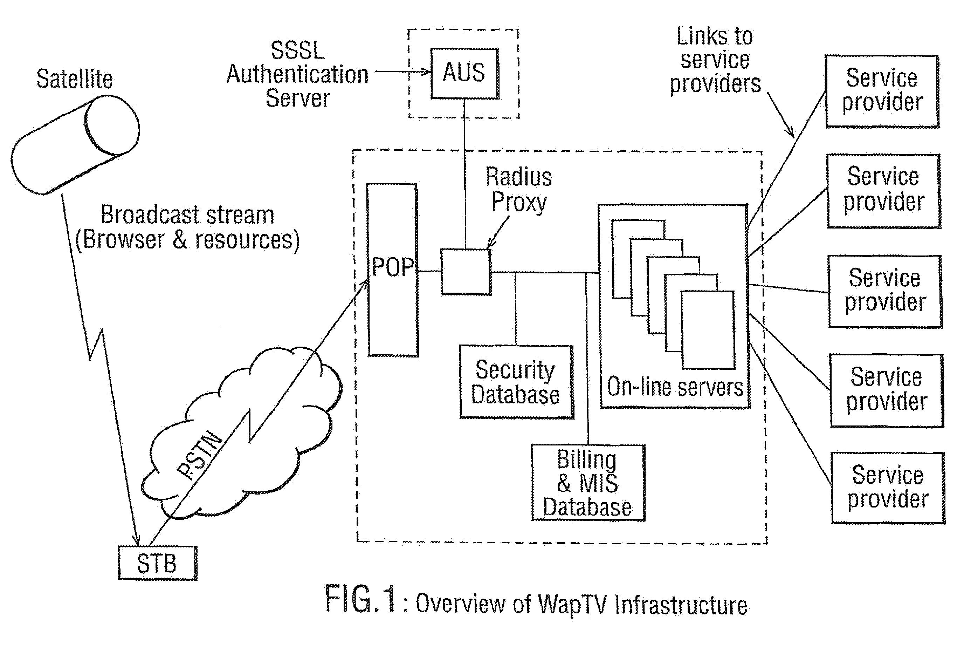

Figure 1 provides a very high level overview of the WapTV infrastructure. The roles of the various components of the WapTV infrastructure shown above are as follows:

### Broadcast stream

A WML micro-browser (the "browser") running on the STB drives the WapTV infrastructure at the consumer end. The browser is loaded on demand by the STB from the broadcast stream. Additional resources may also be broadcast and loaded as required by the browser.

### Set-top-box (STB)

The browser is loaded into the STB whenever the user or STB triggers the load process. Possible launch points include:
- the pressing of the "text" button on the remote control
- a selectable option in the Electronic Program Guide (EPG)
- the pressing of an active colour button prompted by a screen icon displayed by the EPG in response to an event in the trigger track
- explicit invocation by another interactive application

The browser is downloaded into the STB and the browser and then executed. Either a default initial service is displayed to the user or the launch point can request a specific service to be displayed using a simple transfer file.

The browser is designed to co-exist and enhance the television channel that the consumer is currently watching. The video and audio feeds associated with the currently selected channel will continue to be delivered. The video stream can be kept full-screen with the browser on top, shrunk to quarter screen leaving the remainder of the screen available for browser-delivered content, or hidden entirely if full-screen browser content is required.

The browser operates in a similar manner to a standard web-browser such as Internet Explorer where the browser can display content including images, text, data input fields, click boxes and other GUI components. The browser addresses the content as URLs, just like a standard HTML browser.

The browser displays WML (Wireless Mark-up Language) and has the capability of executing WMLScript. For most services the first few resources (WML, WMLScript, images) are typically broadcast so as to not require the browser to go on-line to access them. On going deeper into the service accessing resources that are not broadcast requires the browser to go on-line to retrieve the content from the WapTV on-line infrastructure.

### Online Connection

When an online connection is required the browser requests the STB to dial a telephone number associated with the current service (this allows different numbers and hence different call tariffs to be associated with each piece of service). The call is terminated on a POP (Point Of Presence, i.e. a bank of modems) operated on behalf of WapTV. Most calls are connected at 28.8 kbps - the modem speed of the STB.

### Authentication and Security

Once a connection is established the call is authenticated using SSSLs proprietary authentication mechanism based on the smart card technology in the STB (SSSL=Sky Subscribers Services Limited). The authentication process checks that a valid card and STB combination is making the call. It then determiners and exchanges a security key with the STB before depositing it in the WapTV Security database. This security key is used to authenticate and decrypt/encrypt any data transferred from/to the STB during this call. It is removed from the database when the call terminates.

The security database is a simple Oracle Parallel Server database running on a cluster of two Sun E6500 servers. The clustered Oracle database implementation is highly resilient with automatic fail-over from one Sun machine to the other in the event of problems with no break in service to STB's already connected. This high degree of resilience has been selected to ensure continuity of service for customers when connected to the infrastructure.

### On-line servers

Once the connection has been made and authenticated successfully the browser can initiate HTTP requests over the connection. These are processed by a bank of On-Line Servers (OLSs) with load balancing across them. The OLS perform the following key roles:
- Authentication and decryption/encryption of requests/responses using SSSL provided security libraries and security key stored in the Security database.
- Forwarding of the STB HTTP requests to the service provider.
- Pre-processing of the response before delivery to the STB to reduce the amount of STB processing required.
- Logging of activity between the STB and the service providers to enable commercial accounting of the use of the infrastructure. This is stored in the Billing and MIS database.

### Service Providers

The WapTV infrastructure is linked to service providers via a variety of different techniques, dependent upon the security, volume and resilience requirements. Currently these include, Internet, Internet VPN (Virtual Private Network), and dedicated private link.

The service providers generally operate their own infrastructure, consisting of a typical web infrastructure. To drive the browser on the STB they can deliver standard WML, however, they can also make use of the additional capabilities and features provided by the WapTV environment.

Service providers must receipt commercial transactions conducted on the WapTV infrastructure (see below).

### The WapTV WML Browser

The basis for much of the browser implementation is the WML, WMLScript and WBXML specifications. However WML has a number of limitations when considered within a rich tele-visual environment.

Consequently we have implemented some extensions to WML, e.g. extending the use of tables and layout. We also support full colour JPEG and MPEG image formats instead of monochrome Wireless Bitmaps.

In addition, our implementation includes numerous ideas related to the environment in which the tele-visual context in which the WML browser pane is displayed, e.g. the configuration of embedded video, background images, colours and fonts. These are outside the scope of the WML specification.

Finally, as the STB only supports a single online interface based on HTTP we have not made use of the other parts of the WAP specification, in particular, we have not used any of the session and transport level specifications.

### Meta-level Features

As the browser is running within a rich tele-visual broadcast environment there are significant features and characteristics of the browser that are outside the scope of WML.

### Browser Configuration

A particular instance of the browser is configured using meta-level resources. This configuration can be changed as a user navigates between services (see Service Configuration), providing a very rich and potentially diverse environment.

A browser configuration includes:
- Browser mode (e.g. full, qtr, popup).
- Full screen background image and background colour
- Size, colour and font definitions for the WML font emphasis elements
- A set of animated colour localsrc images
- The location, size and properties of the required screen components

The different screen components that can be configured include:
- Menu
- Browser pane(s). Multiple browser panes can be configured on the same screen.
- Title text
- Hint text
- Banner pane
- ¼ screen video pane
- Service Logo
- Status indicator
- Tariff information
- Clock

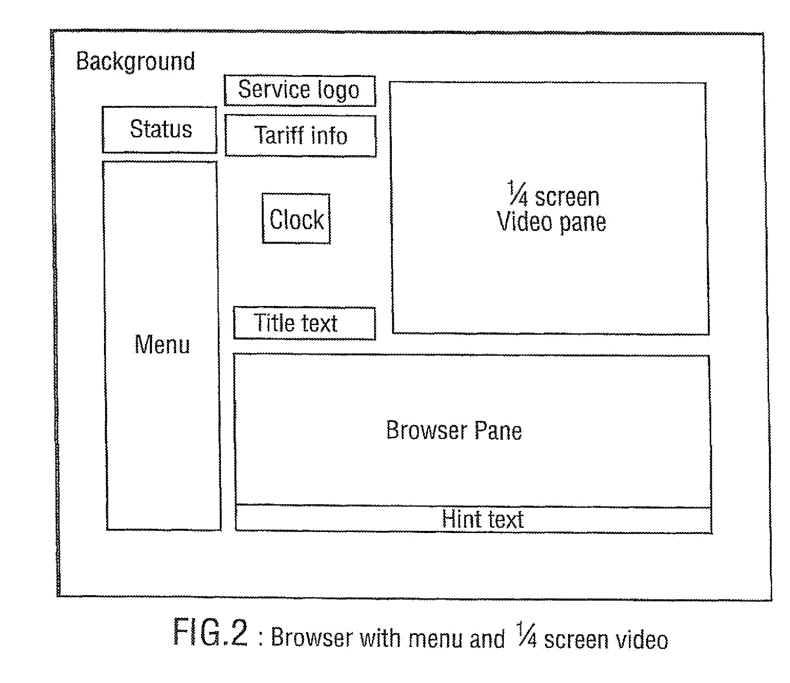

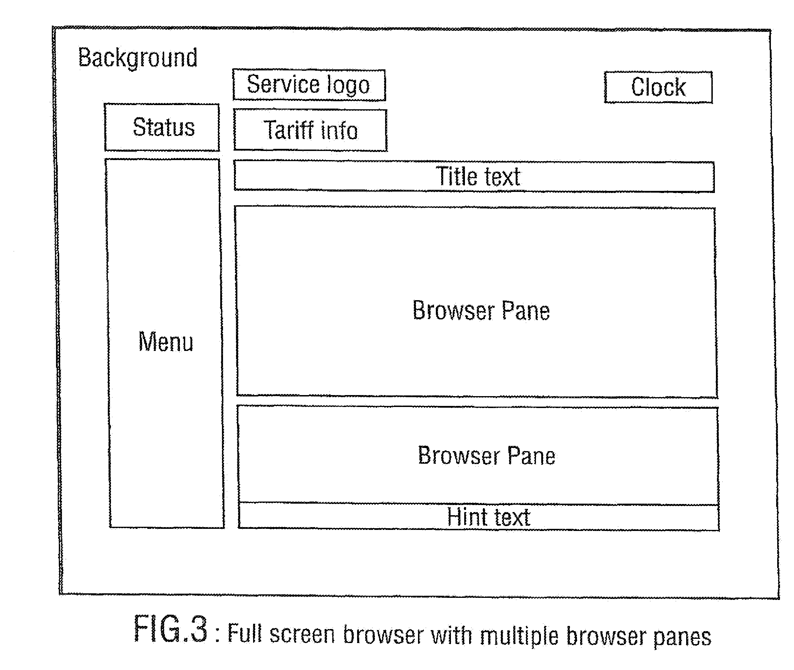

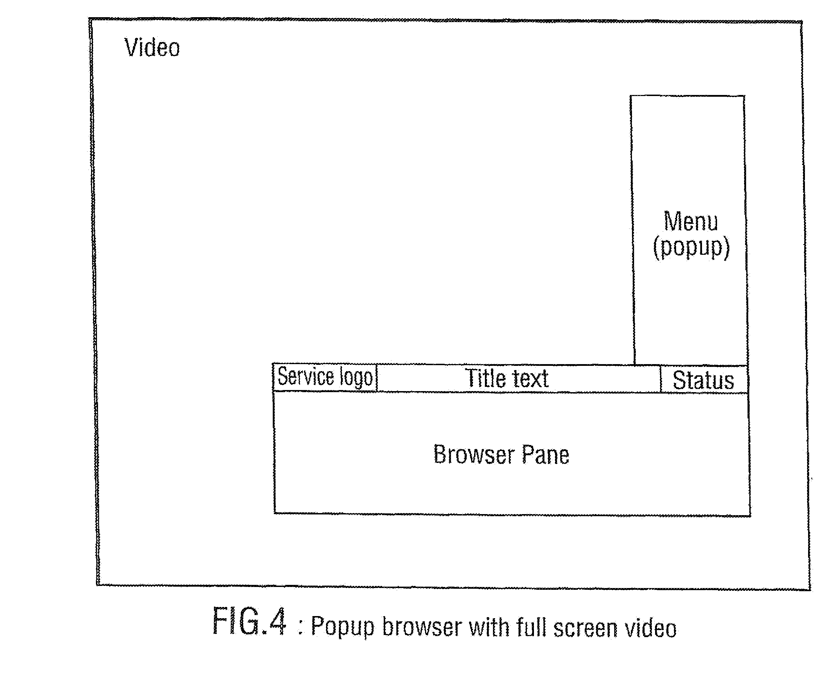

The configuration enables the browser to take on a wide range of tele-visual look and feels. Examples include:
- Browser with menu and ¼ screen video (Figure 2)
- Full screen browser with multiple browser panes (Figure 3)
- Popup browser with full screen video (Figure 4)

### Universal Service Locator or Service Key

A Universal Service Locator (USL) or Service Key is a number that correspondes to a memorable keyword that uniquely identifies a service. The number is derived from the keyword using the character mappings on the remote control, i.e., a,b,c => 2; d,e,f=> 3 etc. For example, the USL for "email" is 36245.

The US concept is a feature built into the browser that provides an easy-to-remember, easy-to-input (using a remote control) mechanism to identify and quickly access a known service.

### Service Configuration

Part of the broadcast environment includes a small amount of data associated with each service.
- USL keyword
- The domain of URL resources associated with this service, e.g. email.waptv.co.uk
- The phone number and tariff description used to connect to the service
- OnLine Server connection information
- A reference to service specific broadcast resources (compiled WML, images etc.)
- A reference to a browser configuration to be used by this service

As a user navigates between services this information is used to retrieve broadcast resources, reconfigure the browser, establish online connections and retrieving online content and retrieving online content.

### WML Extensions

### Improving Layout Control

To satisfy the layout requirements of a sophisticated tele-visual environment we had to introduce a small number of specific extensions to the WML DTD (Document Type Definition).
- td and font emphasis elements were all modified to contain %fields within their body i.e.

```
       <!ELEMENT td (%fields)*>
        <!ELEMENT em (%fields)*>
        <!ELEMENT strong (%fields)*>
        <!ELEMENT b (%fields)*>
        <!ELEMENT i (%fields)*>
        <!ELEMENT u (%fields)*>
        <!ELEMENT big (%fields)*>
        <!ELEMENT small (%fields)*>
```

This enables tables to be used to layout any WML element, including input fields and tables. It also enables font emphasis to be applied to all elements, not just text.
• Additional layout attributes were added to the card, p, and table elements:

| Element | Attribute | Description |
|---|---|---|
| card | paragap | This defines the number of pixels that should be placed between paragraph elements within the card |
| card | scroll | When set to "true" this instructs the browser to pre-allocate space for a scrollbar when performing layout calculations. (For drawing efficiency only.) |
| p | linegap | This defines the number of pixels that should be placed between lines within the paragraph. |
| table | rowgap | This defines the number of pixels that should be placed between rows within a table. |

### Card-level Control of the Browser

To achieve a more dynamic look and feel some additional card attributes were introduced that drive aspects of the browser configuration and/or properties of the meta-level browser components.

| | | |
|---|---|---|
| card | banner | The URL of the image to display in the banner area of the browser |
| card | mode | The configuration mode of the browser. |

### WML Interpretation

Although WML was originally specified for devices with far less capability than a digital set-top-box, the specification has been interpreted in a manner that maximises the capability of the browser within this environment.

### Dos

- In-line "do" elements are rendered inline.
- Top-level "do" elements are used to populate the browser menu.
- Any "do" can be bound to a specific remote control key, including the colour buttons, by use of a specific "vnd.wtv-..." do type. In addition certain standard do types are bound to specific keys, e.g., prev => backup, help => help, accept => green.
- An image is associated with every "do". This is used to identify it as an active screen component and give feedback to the user about the key bindings.

### Anchors

- An image is associated with each anchor to highlight it as an active screen component and give feedback to the user about any accesskey bindings.

### Titles

- The "title" attribute of a card is displayed in the browser title area.
- The "title" attribute of active elements (do, anchor, input, select) is used as a way of specifying the hint text that is displayed when the element gains focus.
- The "title" attribute of an "optgroup" element is used as the "optgroup" value if no child "option" of the "optgroup" is selected.

### Input

- By default an input field consists of a single input with horizontal scrolling of content. The width is determined from the size attribute.
- If the input format attribute consists of a (non-standard) single integer n the input field is displayed as a multi-line input consisting of *n* visible lines. The width is determined from the size attribute. Content wraps and scrolls vertically.

### Browser Resource Search Path

When the browser is required to retrieve a resource identified by a URL (for example when an "anchor" is activated) the search path for the resource consists of the following two step process:
1. Check the broadcast resources for the current service, if any, to determine if they contain the required resource.
2. If not, request the resource from the online infrastructure. An online connection is established automatically if the browser is not currently online.

This enables the design of a service to be carried out without reference to what resources are broadcast and what resources are retrieved online. Once the service is complete a selection of service resources can be packaged up and broadcast, If these broadcast resources are chosen in such a way that the "top" of the service is broadcast this can have the effect of delaying the point when an online connection is established.

### WapTV On-line Processing

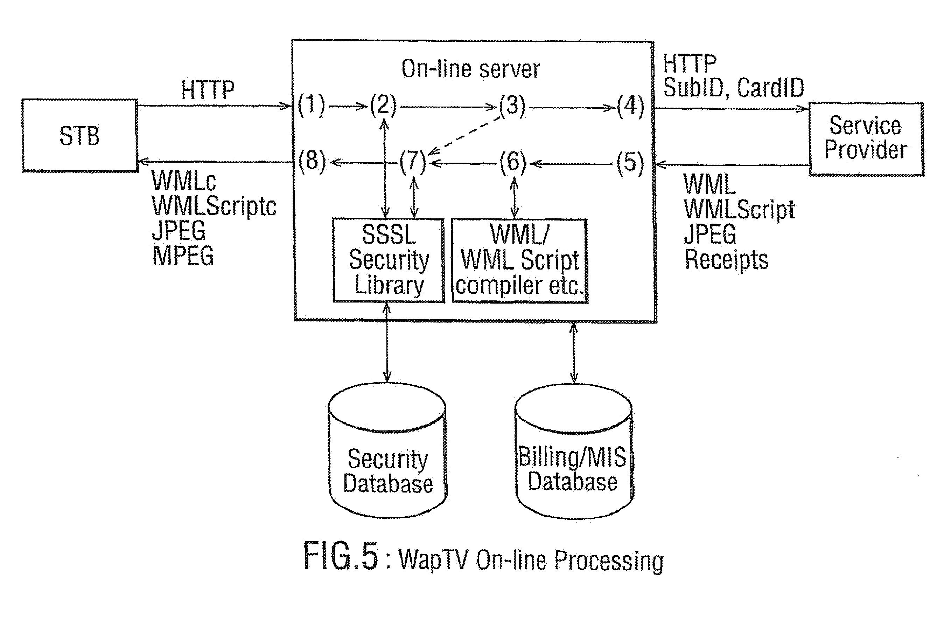

The following steps describe the sequence of events performed during the processing of a single HTTP request from the browser running in a STB. These are depicted in Figure 5.

### 1. Receive:

The OLS waits for HTTP protocol requests from the STB.

### 2. Authentication / Decryption:

A library provided by SSSL is called to authenticate and optionally decrypt the request. This retrieves the security key stored in the Security database for this connection.

### 3. Authorisation:

The request URL's domain is checked against a table of authorised service providers. If the domain is not authorised or is temporarily disabled, the OLS returns an access denied or closed page.

### 4. Forwarding:

The HTTP request is then forwarded to the relevant service provider. Additional HTTP headers are added to the request. These include the smart card ID and Sky subscriber ID. This allows the service provider to uniquely identify a specific household accessing their service and track their behaviour across requests and sessions.

### 5. Response:

The OLS then waits for the HTTP response from the service provider. Any commercial transactions conducted as a consequence of this request must be receipted by the service provider.

These are reported to WapTV using an additional HTTP header in the response. This enables the reconciliation of commerce transactions required under the SSSL subsidy recovery regime to be performed.

### 6. Server pre-processing:

Depending on the mime type of the resource requested the OLS may perform some pre-processing of the response to reduce the processing subsequently required within the STB when it receives the response. The following resource transformations are perfomed:
- WML => compiled WML as defined by WBXML
- WMLScript => compiled WMLScript as defined by WMLScript
- JPEG => MPEG image conversion

### 7. Digital Signing / Encryption:

The processed response is then digitally signed and optionally encrypted.

### 8. Send

Finally, the response is sent back to the set top box using the HTTP protocol.

It should be noted that the present invention is not limited to the embodiments described above. It is envisaged that various modifications and variations to the above described embodiments could be made without falling outside the scope of the present invention as determined from the claims.

The present application discloses television receivers, methods, a server and a television system according to the following numbered clauses:
1. A television receiver comprising a modem for establishing a telecommunications link to a remote site for retrieving therefrom information data containing information represented by the Wireless Markup Language (WML), and being arranged to output display data derived from said information data, said display data representing at least a part of an interactive image for display.
2. The television receiver of clause 1, comprising a browser for displaying WML-based pages, and for executing WMLScript-based commands.
3. The television receiver of clause 1 or 2, wherein said information data contains information represented in accordance with an extended WML Document Type Definition (DTD), wherein the WML DTD is extended to represent additional layout and/or functional attributes associated with predetermined elements of WML.
4. The television receiver of any preceding clause, being responsive to viewer manipulation of an input device comprising a number of keys each associated with one of a number of predetermined colours, wherein WML DTD is extended to support a representation of viewer-selectable items for display in said interactive image, each of said items being represented in one of said colours so that viewer manipulation of one of said keys associated with one of said predetermined colours causes selection of the item being represented in said one predetermined colour.
5. The television receiver of any preceding clause, wherein said information data represent information in compiled form, the television receiver further comprising processing means for decompiling the information.
6. A television receiver for receiving signals representing image data and information data, said information data representing an interactive image for display and comprising metadata representative of metalevel information defining the configuration of the interactive image, the receiver comprising processing means for generating a signal representative of said interactive image configured in accordance with said metalevel information.
7. The television receiver of clause 6, wherein said information data is represented by a broadcast signal.
8. The television receiver of clause 6, further comprising a modem for establishing a telecommunications link to a remote site, and a browser for downloading said information data from said remote site.
9. The television receiver of any of clauses 6 to 8, wherein said configuration includes the layout of said interactive image.
10. The television receiver of any of clauses 6 to 9, wherein said interactive image contains a number of viewer-selectable items each associated with a service, and wherein said configuration includes the association of service information with said items.
11. A television receiver for receiving signals representing image data and information data and for outputting data representing an interactive image for display, the interactive image comprising a number of viewer-selectable items each associated with a service, the receiver being responsive to viewer-manipulation of an input device for selection of one of said items to cause the service associated with the selected item to be provided, wherein each of said items is associated with a key uniquely identifying the service associated therewith, wherein user selection of an item is effected by entry into the input device of the key associated with the service to be selected.
12. The television receiver of clause 11, wherein the key is a keyword containing a number of letters and/or numbers.
13. The television receiver of clause 12, wherein the keyword is descriptive of the service associated therewith,
14. The television receiver of clause 12 or 13, wherein the input device comprises a numeric keyboard, wherein each number of the numeric keyboard corresponds to a plurality of letters, and selection of an item is effected by keying into the numeric keyboard the numbers corresponding to the letters and/or numbers of the keyword.
15. A television receiver for receiving broadcast television signals representing image data and first information data, the receiver comprising a modem for establishing a telecommunications link to a remote site for downloading second information data, the receiver being arranged to output data derived from said first and/or second information data and representing an interactive image for display, and being responsive to viewer manipulation of an input device for the selection of a service from the interactive image to determine whether the data pertaining to the service is contained in said first information data, and, depending on the determination, to establish a telecommunications link to said remote site to download therefrom information data pertaining to the selected service.
16. A method of operating a server for connecting a television receiver to a remote site, the method comprising:
   receiving a request from a television receiver for a connection with a remote site;
   authenticating the request by determining whether the request originates from a television receiver authorised to make such request;
   authorising the request by determining whether access to the remote site by the television receiver is available;
   forwarding the request to the remote site;
   receiving a response from the remote site; and
   transmitting the response to the television receiver.
17. The method of clause 16, wherein said step of authenticating the request comprises:
   receiving from the television receiver a smart card ID associated with a smart card used for operation of the television receiver;
   accessing a database to determine a subscriber ID on the basis of the smart card ID; and
   generating a signal indicating that authentication has been completed.
18. The method of clause 17, wherein said step of authenticating the request further comprises:
   assigning a security key to the connection with the television receiver;
   transmitting the security key to the television receiver, and
   storing the security key in a database for use during the connection.
19. The method of clause 18, wherein the security key is removed from the database after termination of the connection.
20. The method of any of clauses 17 to 19, further comprising:
   adding the smart card and subscriber IDs to the request before forwarding the request to the remote site.
21. The method of any of clauses 16 to 20, further comprising:
   processing the response from the remote site to convert the response into a predetermined format supported by the television receiver before transmitting the response to the television receiver.
22. The method of any of clauses 16 to 21, further comprising:
   decrypting the request before forwarding the request to the remote site; and
   encrypting the response from the remote site before transmitting the response to the television receiver.
23. The method of any of clauses 16 to 22, further comprising:
   compiling the response before transmitting the response to the television receiver.
24. The method of any of clauses 16 to 23, wherein the request from the television receiver is in compiled form, the method further comprising:
   decompiling the request before forwarding the request to the remote site.
25. The method of any of clauses 16 to 24, wherein the request from the television receiver and the response to the television receiver are based on the HyperText Transfer Protocol (HTTP).
26. The method of any of clauses 16 to 25, wherein the request from and the response to the television receiver are in the WML format.
27. A server arranged to perform the method of any of clauses 16 to 26.
28. A method of processing a HTTP request substantially as described hereinabove with reference to Figure 5.
29. A television system substantially as described hereinabove with reference to Figures 1 to 4.

## Claims

1. A television receiver for receiving signals representing image data and information data, said information data representing an interactive image for display by a browser and comprising metadata representative of metalevel information comprising browser configuration information defining the configuration of the browser, the receiver comprising processing means for configuring said browser in accordance with said browser configuration information for the display of said interactive image.

2. The television receiver of claim 1, wherein said information data is represented by a broadcast signal.

3. The television receiver of claim 1, further comprising a modem for establishing a telecommunications link to a remote site, wherein the browser is arranged to download information data from said remote site.

4. The television receiver of any one of the preceding claims, wherein the browser is configurable by the processing means in accordance with said browser configuration information to be displayed simultaneously with an image derived from said image data.

5. The television receiver of claim 4, wherein said image derived from said image data is displayed in a video pane.

6. The television receiver of claim 5, wherein the video pane is a quarter screen video pane.

7. The television receiver of claim 4, wherein the browser is displayed as a popup displayed simultaneously with a full screen image derived from said image data.

8. The television receiver of any one of claims 1 to 3, wherein the browser is configurable by the processing means in accordance with said browser configuration information to be displayed as a full screen image.

9. The television receiver of any one of the preceding claims, wherein said metalevel information includes the layout of said interactive image.

10. The television receiver of any one of the preceding claims, wherein said interactive image contains a number of viewer-selectabie items each associated with a service, and wherein said metalevel information includes the association of service information with said items.
